# EUROPÄISCHE PATENTSCHRIFT

(11) **EP 3 013 745 B1**
(45) Veröffentlichungstag und Bekanntmachung des Hinweises auf die Patenterteilung: **12.06.2019**
(21) Anmeldenummer: 14741887.5
(22) Anmeldetag: 22.07.2014
(51) Int. Cl.: C01B 33/107

(54) **VERFAHREN ZUR HERSTELLUNG VON TRICHLORSILAN**
METHOD FOR PRODUCING TRICHLOROSILANE
PROCÉDÉ DE PRODUCTION DE TRICHLOROSILANE

(30) Priorität: 31.07.2013 DE 102013215011
(43) Veröffentlichungstag der Anmeldung: 04.05.2016
(73) Patentinhaber: Wacker Chemie AG, 81737 München (DE)
(72) Erfinder: SOBOTA, Marek, 81377 München (DE); ALBER, Anne, 81371 München (DE)
(74) Vertreter: Ege, Markus
(86) Internationale Anmeldenummer: PCT/EP2014/065716
(87) Internationale Veröffentlichungsnummer: WO 2015/014670

(56) Entgegenhaltungen:
- DE-A1- 19 740 923
- US-A1- 2012 301 385
- LOBREYER T ET AL: "Silicon for trichlorosilane production basic research and development", SILICON FOR THE CHEMICAL INDUSTRY, NORWEGIAN UNIVERSITY OF SCIENCE AND TECHNOLOGY, TRONDHEIM, NO, 18. Juni 1996 (1996-06-18), Seiten 147-155, XP002993832,
- SAMORI H ET AL: "Effect of trace elements in metallurgical silicon on trichlorosilane synthetis reaction", SILICON FOR THE CHEMICAL INDUSTRY, NORWEGIAN UNIVERSITY OF SCIENCE AND TECHNOLOGY, TRONDHEIM, NO, 18. Juni 1996 (1996-06-18), Seiten 157-167, XP002993831,

## Beschreibung

Die Erfindung betrifft ein Verfahren zur Herstellung von Trichlorsilan, TCS.

Die Herstellung von Trichlorsilan erfolgt üblicherweise in einem Wirbelbettverfahren aus metallurgischem Silicium und Chlorwasserstoff. Um hochreines Trichlorsilan zu erzeugen, erfolgt anschließend eine Destillation.

US 4092446 A offenbart einen Reaktor, in dem ein Siliciumbett, bestehend aus Siliciumpartikeln, mit Chlorwasserstoff durchströmt wird. Der Chlorwasserstoff reagiert mit den Siliciumpartikeln zu Siliciumtetrachlorid (STC) und TCS und Wasserstoff.

Ebenso ist es bekannt, STC zu TCS zu hydrieren. Dies erfolgt durch Reaktion von STC mit Wasserstoff in TCS und Chlorwasserstoff.

Die größte Menge an STC fällt bei der Abscheidung von polykristallinem Silicium an. Polykristallines Silicium wird beispielweise mittels des Siemens-Prozesses erzeugt. Dabei wird Silicium in einem Reaktor an erhitzten Dünnstäben abgeschieden. Als Prozessgas wird als Silicium enthaltende Komponente ein Halogensilan wie TCS in Anwesenheit von Wasserstoff verwendet. Dadurch ist es möglich, aus dem bei der Abscheidung entstehenden Nebenprodukt STC TCS zu erzeugen und jenes TCS wieder dem Abscheideprozess zuzuführen, um elementares Silicium zu erzeugen.

Die Selektivität einer chemischen Umsetzung gibt an, welcher Anteil des insgesamt umgesetzten Ausgangsstoffes unter Berücksichtigung der Stöchiometrie in das gewünschte Zielprodukt umgesetzt wurde.

Bei der Umsetzung von metallurgischem Silizium, mg-Si, und HCl zu TCS (HSiCl₃) entstehen Wasserstoff und Nebenprodukte

Si + 3 HCl = HSiCl₃ + H₂ + Nebenprodukte (1)

Die Menge der entstehenden Nebenprodukte in der Reaktion (1) und damit die TCS-Selektivität, definiert als Molarbruch TCS/(TCS + Nebenprodukte), wird durch mehrere Faktoren beeinflusst, u.a. auch durch die katalytische Wirkung von Verunreinigungen (Begleitelementen) im eingesetzten mg-Si.

Es ist bekannt, dass Verunreinigungen in mg-Si oder Zugabe von einem Katalysator zu mg-Si die Selektivität der Reaktion beeinflussen können. Einige Verunreinigungen haben einen positiven Einfluss, erhöhen also die Selektivität. Andere Verunreinigungen haben dagegen einen negativen Einfluss. Bei Kenntnis der Wirkung der einzelnen Begleitelemente auf die Selektivität könnte die Konzentration dieser Elemente für das einzusetzende mg-Si spezifiziert werden, um eine optimale TCS-Selektivität zu erreichen.

US 20090060818 A1 beansprucht ein Verfahren zur Herstellung von TCS durch Umsetzung von Silicium mit HCl, oder STC mit Wasserstoff in Gegenwart von Silicium und Katalysatoren. Als Katalysator werden z.B. Fe, Cu, Al, V, Sb oder ihre Verbindungen verwendet. Silicium und Katalysatoren werden vor der Reaktion miteinander laminiert und zerkleinert. Durch unmittelbaren Kontakt zwischen Silicium und Katalysator wird u.a. die Ausbeute von Nebenprodukten deutlich herabgesetzt, was die TCS-Selektivität erhöht.

EP 0489441 B1 beansprucht ein Verfahren zur Herstellung von Silanen durch Reaktion von HCl mit Silicium, unter Verwendung von einem Katalysator, der die STC-Ausbeute erhöht. Als Katalysator können Sn, Ni, As, Pd, Rh, Pt, Ir, Al und deren Verbindungen eingesetzt werden.

US 2499009 A offenbart ein Verfahren zur Herstellung von Chlorsilanen, mit hoher Ausbeute an DCS von etwa 20 %. Im ersten Schritt wird Silicium mit Cu-Halogenid aufgeheizt, um Kupfersilizide herzustellen und anschließend mit HCl zu Chlorsilanen umgesetzt.

WO 2005003030 A1 offenbart ein Verfahren zur Herstellung von TCS durch Umsetzung von Si mit HCI-Gas bei einer Temperatur zwischen 250 und 1100 °C und einem absoluten Druck von 0,5-30 bar (0,5-30 atm) in einem Fließbettreaktor, in einem Rührbettreaktor oder in einem Festbettreaktor, dadurch gekennzeichnet, dass das an den Reaktor gelieferte Si zwischen 30 und 10.000 ppm Cr enthält.

Der Einsatz von mg-Si mit erhöhtem Cr-Gehalt sollte demzufolge zu einer hohen TCS-Selektivität führen.

WO 2012021064 A1 beansprucht ein Verfahren zur Herstellung von TCS durch Umsetzung von Si mit HCI-Gas bei einer Temperatur zwischen 250 und 1100 °C und einem absoluten Druck von 0,5-30 bar (0,5-30 atm) in einem Fließbettreaktor, in einem Rührbettreaktor oder in einem Festbettreaktor, dadurch gekennzeichnet, dass das an
den Reaktor gelieferte Si zwischen 40 und 10.000 ppm Ba und optional zwischen 40 und 10.000 ppm Cu enthält.

Der Einsatz von mg-Si mit erhöhtem Ba-Gehalt führt zur hohen TCS-Selektivität. Die TCS-Selektivität wird weiter erhöht durch Zugabe von Cu.

US 5871705 A schlägt ein Verfahren zur Herstellung von TCS durch Umsetzung von Silicium mit Chlorwasserstoff vor, umfassend die Kontaktierung von mindestens einer Silanverbindung, ausgewählt aus der Gruppe bestehend aus Dichlorsilan (DCS), Monochlorsilan (MCS) und Monosilan, mit Silicium während oder vor der Reaktion zwischen Silicium und Chlorwasserstoff. Silicium wird also mit einer Silanverbindung kontaktiert, um die Oxidschicht auf der Silicium-Oberfläche zu entfernen und damit die Reaktivität gegenüber HCl zu steigern. Auch ist offenbart, die Reaktion zwischen dem Silicium und dem Chlorwasserstoff in Gegenwart eines Katalysators mit katalytischer Aktivität zur Herstellung von TCS aus Silicium und Chlorwasserstoff und einer Alkalimetallverbindung durchzuführen. Dies unterdrückt die Reaktion zu STC und erhöht damit die TCS-Selektivität.

WO 2006031120 A1 beschreibt ein Verfahren zur Herstellung von TCS durch Umsetzung von Si mit HCI-Gas bei einer Temperatur zwischen 250 und 1100 °C und einem Druck von 0,1-30 bar (0,1-30 bar) in einem Fließbettreaktor, in einem Rührbettreaktor oder in einem Festbettreaktor, dadurch gekennzeichnet, dass das an den Reaktor gelieferte Si weniger als 100 ppm Mn enthält. Der Einsatz von mg-Si mit mehr als 100 ppm Mn oder Zugabe von Mn in den Reaktor führt zur niedrigeren Reaktivität und TCS-Selektivität.

Wakamatsu et al., Silicon for the Chemical Industry IV, 1998, 123-132, untersuchten die katalytische Wirkung von ausgewählten Begleitmetallen. Die Zugabe von relativ großen Mengen an rotem Phosphor (200-2000 ppm) zu mg-Si hat einen negativen Einfluss auf die TCS-Selektivität. Dieser Effekt wird noch gesteigert durch Zugabe von FeCl₂.

WO 2012152434 A1 beschreibt ein Verfahren zum Erzeugen von sphärischen Partikeln aus mg-Si, die gute Eigenschaften für eine nachfolgende TCS-Synthese aufweisen. Die durch Zerstäuben von geschmolzenem mg-Si (evtl. mit gezielten Beimengungen) erzeugten Partikeln haben eine mittlere Partikelgröße von 20 - 425 µm. Die Konzentration von folgenden Begleitelementen wird spezifiziert: Cu (0,01 - 2 Gew.-%), Al (≤ 1 Gew.-%), Ca (≤ 0,02 Gew.-%), C (< 400 ppm), B (≤ 15 ppm) und P (≤ 15 ppm).

Im Stand der Technik ist also bekannt, dass Verunreinigungen in mg-Si oder Zugabe von einem Katalysator zu mg-Si die Selektivität der Reaktion beeinflussen können, wobei von einem positiven Effekt auf die TCS-Selektivität für Cr, Ba und Alkalimetallverbindungen berichtet wird, während eine erhöhte Bildung von Nebenprodukten und somit ein negativer Einfluss auf die TCS-Selektivität u.a. bei Mn, Ni, Cu und rotem Phosphor beobachtet wurde.

Die Konzentration der Verunreinigungen in mg-Si hängt von der Zusammensetzung der eingesetzten Rohstoffe (Quarzsand, Kohle, Koks, Elektroden), von der Durchführung des mg-Si-Herstellung-Prozesses und folgender Raffinierung ("refining") ab.

Ein Großteil der Verunreinigungen in mg-Si befindet sich in intermetallischen Phasen, die während des Erstarrens von flüssigem mg-Si an der Grenzfläche zwischen den Silicium-Körnern abgeschieden werden. Die Siliciumkorngröße und die Form, Größe und Verteilung von den intermetallischen Phasen hängen von der Erstarrungsgeschwindigkeit ab: eine schnelle Abkühlrate führt, im Vergleich zum langsamen Abkühlen, zur Bildung von kleineren primären Silicium-Körnern mit dünneren und gleichmäßiger verteilten intermetallischen Phasen.

Die Verteilung der Verunreinigungsphasen zwischen den Siliciumkristalliten kann z.B. anhand der in US 5334738 A definierten Strukturkennzahl QF quantifiziert werden. Dort ist ein Verfahren zur Herstellung von Methylchlorsilanen durch Direktsynthese beschrieben, welches dadurch gekennzeichnet ist, dass die Produktionsraten der einzelnen Methylchlorsilanen durch Einsatz von mg-Si mit einer bestimmten Struktur (bzgl. der Form der intermetallischen Phasen) gesteuert werden. Hierfür wird ein Strukturkennzahl QF definiert, als Quotient der Gesamtfläche aller intermetallischen Phasen mit einer länglichen Form und der Gesamtfläche aller intermetallischen Phasen mit einer rundlichen Form auf der Schnittfläche von einem Siliciumprobekörper. Der QF-Wert hängt von der Geschwindigkeit der Erstarrung der Si-Schmelze ab, langsam erstarrtes Si hat einen niedrigen QF-Wert, schnell erstarrtes Si zeigt dagegen einen hohen QF-Wert. Wegen seiner geeigneten Struktur wird für das Verfahren wassergranuliertes Silicium (bzw. allgemein Silicium mit einer Strukturkennzahl QF 18 bis 60) eingesetzt.

Typischerweise wird die mg-Si Schmelze in 10 - 40 cm dicke Ingots gegossen (langsame Abkühlrate), nach dem Abkühlen gebrochen und ausgesiebt.

GB1213845 A offenbart ein Verfahren zum Vergießen von Ferrolegierungen, bei dem die geschmolzene Legierung schichtweise in eine Gießform gegossen wird (Mehrschichtgießen). Zunächst wird die erste Schicht der Ferrolegierung in ein ebenerdiges Bett aus körnigem Material gegossen. So lässt sich nach Abkühlung die geschichtete Ferrolegierung aus dem Bett herausheben.

Eine schnellere Abkühlrate wird z. B. durch Dünnschichtgießen, Wassergranulation oder Gasatomisierung erreicht.

Ein Verfahren zum Gießen von Silicium-Metall in einer Dünnschicht (ca. 1,5 cm) auf eine wassergekühlte Kupferplatte ist bekannt aus Bullón et al. (Infacon X, 2004, 147-154). Wegen einer schnellen Erstarrung (ca. 30 s) haben die entstehenden Silicium-Körner eine Durchschnittgröße von nur ca. 100 µm (300 µm bei der Benutzung von traditionellen Gussformen).

Ein Verfahren zur Wassergranulation von Silicium-Metall ist beschrieben in Brekken et al. (Silicon for the Chemical Industry III, 1996, 33-45). 78 % von dem produzierten Granulat hat eine Größe von 3 - 10 mm, was durch die daraus resultierende Abkühlrate zu einer günstigen Verteilung der intermetallischen Phasen führt.

US 4986971 A offenbart ein Verfahren zur Herstellung von TCS in einem Wirbelschichtreaktor durch Umsetzung von Si-Pulver mit HCl bei einer Temperatur zwischen 280 und 300 °C, welches dadurch gekennzeichnet ist, dass das eingesetzte Si-Pulver durch Gasatomisierung von Si-Schmelze hergestellt wurde und bevorzugt eine Partikelgröße von ca. 1 bis ca. 1000 µm hat.

Es wurde gefunden, dass schon eine P-Kontamination von mg-Si im mittleren zweistelligen ppmw Bereich einen negativen Einfluss auf die TCS-Selektivität hat. Durch Einsatz von mg-Si mit P-Gehalt von größer als 15 ppmw und kleiner als 30 ppmw eine hohe TCS-Selektivität erreicht.

Kommerziell verfügbares mg-Si enthält typischerweise 20 bis 50 ppmw Phosphor. Um Silicium mit einem niedrigen P-Gehalt (< 30 ppmw) zu erhalten, können beispielsweise bei der mg-Si Herstellung P-arme Rohstoffe (Quarzsand, Kohle, Koks, Elektroden) eingesetzt werden. Ein Teil des Phosphors, das in den Ofen eingeführt wird, verlässt den Ofen mit dem Abgas. Um möglichst P-armes mg-Si zu erhalten, soll der Anteil von P, der mit dem Abgas den Ofen verlässt, maximiert werden. Dies kann z.B. durch "kontinuierliches Abstechen" (continuous tapping) des Ofens erzielt werden.

Gegebenenfalls kann der Phosphorgehalt auch nach der Gewinnung des Siliciums noch weiter reduziert werden, was aber mit zusätzlichen Kosten verbunden ist. Für die nachträgliche Reduktion des Phosphorgehaltes im Silicium sind im Stand der Technik mehrere Verfahren bekannt.

In US 20120260850 A1 wird beispielsweise die Reinigung von mg-Si mittels Rekristallisation aus der übersättigten Al-Si Schmelze (Gegenstrom-Kaskade Ausführung) beschrieben.

US 2007245854 A1 beschreibt ein Verfahren, in dem N₂ und/oder Al₂O₃ oder Al zu geschmolzenem mg-Si hinzugefügt wird, um eine Schlacke zu bilden, in der sich im mg-Si enthaltenes P und B anreichern. Das gereinigte geschmolzene Si wird dann von der Schlacke separiert.

T. Lobreyer beschreibt in "Silicon for trichlorosilane production basic research and development", Silicon for the Chemical Industry, Norwegian University of Science and Technology, Trondheim, NO, 19. Juni 1996, Seiten 147-155, Verfahren zur Herstellung von Trichlorsilan durch Umsetzung von metallurgischem Silicium und HCl, in dem Silicium mit einem Titan-Gehalt von 0,07 Gew.-% verwendet wird. Das verwendete metallurgische Silicium hat beispielsweise einen Silicium-Gehalt von 98,8 Gew.-%.

H. ET. Samori befasste sich in "Effect of trace elements in metallurgical silicon on trichlorosilane synthesis reaction", Silicon for the Chemical Industry, Norwegian University of Science and Technology, Trondheim, NO, 19. Juni 1996, Seiten 157-167, mit der Herstellung von Trichlorsilan durch Umsetzung von Salzsäure mit metallurgischem Silicium und untersuchte hierbei den Einfluss von Verunreinigungen auf die Selektivität der Trichlorsilan-Bildung. Samori lehrt, dass die Selektivität durch Aluminium gesteigert und durch FeCl₂ verringert wird.

Die Aufgabe der Erfindung bestand darin, ein Verfahren zur Herstellung von TCS aus mg-Si und HCl bereitzustellen, welches eine hohe TCS-Selektivität bei Verwendung von mg-Si mit einem P-Gehalt größer oder gleich 30 ppmw aufweist.

Die Aufgabe wird gelöst durch ein Verfahren zur Herstellung von Trichlorsilan, TCS, durch Umsetzung von metallurgischem Silizium, mg-Si, und HCl, dadurch gekennzeichnet, dass mg-Si mit einem Titan-Gehalt von größer oder gleich 0,08 Gew.-% und kleiner oder gleich 0,12 Gew.-% sowie einem Phosphor-Gehalt von größer oder gleich 30 ppmw verwendet wird.

Vorzugweise wird mg-Si verwendet, das während der Erstarrung eine maximale mittlere Dicke von 30 mm oder einen maximalen mittleren Durchmesser von 15 mm aufweist.

Vorzugsweise ist das eingesetzte mg-Si bei einer schnellen Abkühlrate erstarrt worden. Unter schnell erstarrtem mg-Si soll mg-Si verstanden werden, welches Besonders bevorzugt wird mg-Si verwendet, das mittels Wassergranulation hergestellt wurde.

Unter mg-Si soll Silicium mit einem Silicium-Gehalt zwischen 95 Gew.-% und 99,8 Gew.-% verstanden werden.

Das verwendete mg-Si weist vorzugweise einen Si-Gehalt von größer als 98 Gew.-% und kleiner oder gleich 99,8 Gew.-% auf.

Vorzugsweise erfolgt die Umsetzung bei einer Temperatur von 280 bis 400 °C, besonders bevorzugt bei einer Temperatur von 320 bis 380 °C.

Vorzugsweise erfolgt die Umsetzung bei einem Druck von 0,1 bis 30 bar, besonders bevorzugt bei einem Druck von 1 bis 4 bar.

Die Erfinder konnten zeigen, dass schon eine P-Kontamination von mg-Si im mittleren zweistelligen ppmw Bereich (ca. ab 30 ppmw) einen negativen Einfluss auf die TCS-Selektivität hat. Zwar ist es gemäß Stand der Technik möglich, mg-Si mit einem niedrigen Phosphor-Gehalt (< 25 ppmw) herzustellen. Dies ist aber mit einem zusätzlichen Aufwand verbunden.

Überraschenderweise wurde gefunden, dass der negative Einfluss des Phosphors auf die TCS-Selektivität durch Einsatz von mg-Si mit einem Titan-Gehalt von größer oder gleich 0,08 Gew.-% und kleiner oder gleich 0,12 Gew.-% verringert wird und somit bei akzeptablen Rohstoffkosten (mg-Si) eine hohe TCS-Selektivität erreicht wird.

mg-Si mit einem Ti-Gehalt von größer als 0,06 Gew.-% kann durch Verwendung vom Ti-reichen Quarzsand oder durch Zugabe von Ti-haltigen Verbindungen in den Schmelzoffen hergestellt werden.

Die TCS-Selektivität wird weiter erhöht, wenn das eingesetzte Ti-reiche mg-Si bei einer schnellen Abkühlrate erstarrt worden ist.

Die Herstellung von TCS durch Umsetzung von HCl und mg-Si mit einem Titan-Gehalt von größer als 0,06 Gew.-% erfolgt vorzugsweise in einem Wirbelschicht-, Rührbett- oder Festbettreaktor.

Die Vorteile der Erfindung werden nachfolgend anhand von Beispielen und Vergleichsbeispielen näher erläutert.

### Beispiele und Vergleichsbeispiele

Die Experimente in den folgenden Beispielen wurden in einem aus Edelstahl gefertigtem Laborwirbelschichtreaktor durchgeführt.

Der Titan- bzw. Phosphor-Gehalt von den getesteten mg-Si Proben wurde mittels Röntgenfluoreszenzanalyse (RFA) ermittelt.

Hierfür wurde mg-Si in einer halbautomatischen Scheibenschwingmühle (HPM 100 Fa. Herzog) feingemahlen (Mahldauer 60 s bei 1500 Umdrehungen).

7 g feingemahlenes mg-Si und 1,4 g Carnaubawachs (Bindemittel) wurden gemischt, bei 150 °C 3 min getrocknet, ca. 30 s in einer Achattreibschale verrieben und bei 35 t Druck 20 s in eine Tablette gepresst.

Die Presstablette wurde im RF(Röntgenfluoreszenz)-Spektrometer analysiert.

Als RF-Spektrometer kam ein Axios^{mAX} mit 4kW Leistung der Fa. PANalytical B.V.zum Einsatz, mit einer Rh-Röhre, einem 300 µm Kollimator, einem LiF 200 Kristall (für Ti Analyse) bzw. einem Ge 111-C Kristall (für P Analyse) und einem Flow Detektor (Durchflusszähler).

Ti bzw. P wurden an der stärksten Linie Kα gemessen bei einer Spannung von 40, bzw. 32 kV und einer Stromstärke von 100 bzw. 125 mA.

Die RFA-Auswertung wurde über einen Vergleich mit einer unabhängigen Referenzmethode, optische Emissionsspektrometrie mit induktiv gekoppeltem Plasma (ICP-OES), kalibriert. Die Kalibrierfunktion am RFA wurde über ein Set von 10 Si Proben mit unterschiedlichen Ti-, bzw. P-Gehalten (0,02 - 0,12 Gew.-%, bzw. 23 - 86 ppm) erstellt.

ICP-OES wurde mit kommerziellen Standardlösungen kalibriert. Die Messunsicherheit (4 σ) der RFA beträgt für Titan 30 ppmw und für Phosphor 3 ppmw.

Für jedes Experiment wurden jeweils 10 g von mg-Si (kommerziell verfügbar, Abkühlungformen: Stückig (ST), Dünnschicht (DS) oder Wassergranulat (WG), gemahlen und gesiebt auf 0 - 355 µm, Si-Gehalt 98,4 - 99,2 Gew.-%, Fe-Gehalt 0,34 - 0,75 Gew.-%, Al-Gehalt 0,19 - 0,36 Gew.-%, Ca-Gehalt 0,02 - 0,13 Gew.-%, Ti-Gehalt 0,02 - 0,10 Gew.-%), in den Reaktor eingefüllt und mit 100 sccm HCl bei einem Druck von 1,5 bar (absolut) umgesetzt.

Das Reaktorgehäuse wurde dabei auf 323 °C geheizt, die Temperatur in der Reaktionszone betrug aufgrund starker Exothermie der Reaktion ca. 360 °C.

Die Analyse der Reaktionsprodukte erfolgte mittels Massenspektroskopie (online Gasstromanalyse) und Gaschromatographie (offline Kondensatanalyse).

Für jedes Experiment wurde die mittlere TCS-Selektivität bei einem Silicium-Umsatz von 13 - 38 % ermittelt.

### Referenz-Beispiel 1, Probe A

Eine durch schnelle Abkühlung hergestellte mg-Si Probe (DS) mit hohem Ti-Gehalt (0,062 Gew.-%) und normalem P-Gehalt (30 ppmw) wurde entsprechend der Beschreibung mit HCl umgesetzt.

Mit dieser Probe (A) wurde eine TCS-Selektivität von 95,6 % erreicht (siehe **Tabelle 1**).

### Beispiel 2, Probe B, erfindungsgemäß

Eine durch schnelle Abkühlung hergestellte mg-Si Probe (WG) mit hohem Ti-Gehalt (0,10 Gew.-%) und hohem P-Gehalt (40 ppmw) wurde entsprechend der Beschreibung mit HCl umgesetzt.

Mit dieser Probe (B) wurde eine TCS-Selektivität von 95,6 % erreicht (siehe **Tabelle 1**).

### Beispiel 2, Proben C und D, erfindungsgemäß

2 durch normale Abkühlung hergestellten mg-Si Proben (ST) mit hohem Ti-Gehalt (0,082, bzw. 0,10 Gew.-%) und hohem P-Gehalt (39, bzw. 41 ppmw) wurden entsprechend der Beschreibung mit HCl umgesetzt.

Mit diesen Proben (C und D) wurde eine TCS-Selektivität von 94,5 % bzw. 94,0 % erreicht (siehe **Tabelle 1**).

**Tabelle 1, Beispiele:**

| Probe | Abkühlrate (Form) | Ti-Gehalt (%) | P-Gehalt (ppm) | Si-Gehalt (%) | TCS-Selektivität (%) |
|---|---|---|---|---|---|
| A | Schnell (DS) | 0,062 | 30 | 98,4 | 95,6 |
| B | Schnell (WG) | 0,096 | 40 | 98,8 | 95,6 |
| C | Normal (ST) | 0,082 | 39 | 99,0 | 94,5 |
| D | Normal (ST) | 0,100 | 41 | 98,7 | 94,0 |

### Beispiel 3, Vergleichsbeispiel, nicht erfindungsgemäß (Proben E, F, G und H)

4 durch normale Abkühlung hergestellten mg-Si Proben (ST) mit normalem Ti-Gehalt (0,023 - 0,032 Gew.-%) wurden entsprechend der Beschreibung mit HCl umgesetzt. Anhand dieser Proben wird erstens illustriert, dass bei normalem Ti-Gehalt die TCS-Selektivität mit steigendem P-Gehalt sinkt (siehe **Tabelle 2**).

Zweitens dient die Probe G als Vergleichsbeispiel zur Ti-reichen Probe A (normaler P-Gehalt & schnelle Abkühlrate) und die Probe H als Vergleichsbeispiel zur Ti-reichen Probe B (hoher P-Gehalt & schnelle Abkühlrate) und zu den Ti-reichen Proben C und D (hoher P-Gehalt & normale Abkühlrate).

Aus diesem Vergleich (A vs. G, bzw. B bis D vs. H) wird ersichtlich, dass (bei ähnlichem P-Gehalt) die Proben mit hohem Ti-Gehalt (> 0,06 Gew.-%) eine um 1,8 - 3,9 % höhere TCS-Selektivität zeigten, als die Proben mit normalem Ti-Gehalt (< 0,04 Gew.-%).

Schließlich werden noch die Proben mit hohem Ti-Gehalt, ähnlichem (und hohem) P-Gehalt und unterschiedlicher Abkühlrate miteinander verglichen (B vs. C und D).

Dies zeigt, dass die schnell abgekühlte Probe (B) eine um 1,1 - 1,6 % höhere TCS-Selektivität aufweist als die normal abgekühlten Proben (C und D).

**Tabelle 2, Vergleichsbeispiele (nicht erfindungsgemäß):**

| Probe | Abkühlrate | Ti-Gehalt (%) | P-Gehalt (ppm) | Si-Gehalt (%) | TCS-Selektivität (%) |
|---|---|---|---|---|---|
| E | Normal (ST) | 0,023 | 15 | 99,0 | 96,1 |
| F | Normal (ST) | 0,030 | 21 | 99,1 | 95,4 |
| G | Normal (ST) | 0,029 | 29 | 98,7 | 93,8 |
| H | Normal (ST) | 0,032 | 40 | 99,2 | 91,7 |

## Patentansprüche

1. Verfahren zur Herstellung von Trichlorsilan, TCS, durch Umsetzung von metallurgischem Silizium, mg-Si, und HCl, **dadurch gekennzeichnet, dass** mg-Si mit einem Titan-Gehalt von größer oder gleich 0,08 Gew.-% und kleiner oder gleich 0,12 Gew.-% sowie einem Phosphor-Gehalt von größer oder gleich 30 ppmw verwendet wird.

2. Verfahren nach einem der Ansprüche 1, **dadurch gekennzeichnet, dass** mg-Si verwendet wird, das während der Erstarrung eine maximale mittlere Dicke von 30 mm oder einen maximalen mittleren Durchmesser von 15 mm aufweist.

3. Verfahren nach Anspruch 2, **dadurch gekennzeichnet, dass** mg-Si verwendet wird, das mittels Wassergranulation hergestellt wurde.

4. Verfahren nach einem der Ansprüche 1 bis 3, **dadurch gekennzeichnet, dass** mg-Si mit einem Si-Gehalt von größer als 98 Gew.-% verwendet wird.

5. Verfahren nach einem der Ansprüche 1 bis 4, **dadurch gekennzeichnet, dass** die Umsetzung bei einer Temperatur von 280 bis 400 °C erfolgt.

6. Verfahren nach Anspruch 5, **dadurch gekennzeichnet, dass** die Umsetzung bei einer Temperatur von 320 bis 380 °C erfolgt.

7. Verfahren nach einem der Ansprüche 1 bis 6, **dadurch gekennzeichnet, dass** die Umsetzung bei einem Druck von 0,1 bis 30 bar erfolgt.

8. Verfahren nach Anspruch 7, **dadurch gekennzeichnet, dass** die Umsetzung bei einem Druck von 1 bis 4 bar erfolgt.

## Claims

1. Process for preparing trichlorosilane, TCS, by reaction of metallurgical silicon, mg-Si, and HCl, **characterized in that** mg-Si having a titanium content greater than or equal to 0.08 wt% and less than or equal to 0.12 wt% and a phosphorus content greater than or equal to 30 ppmw is used.

2. Process according to Claim 1, **characterized in that** said mg-Si exhibits a maximum mean thickness of 30 mm or a maximum mean diameter of 15 mm during solidification.

3. Process according to Claim 2, **characterized in that** said mg-Si has been prepared by water granulation.

4. Process according to any one of Claims 1 to 3, **characterized in that** said mg-Si has an Si content greater than 98 wt%.

5. Process according to any of Claims 1 to 4, **characterized in that** said reaction is effected at a temperature of from 280 to 400°C.

6. Process according to Claim 5, **characterized in that** said reaction is effected at a temperature of from 320 to 380°C.

7. Process according to any of Claims 1 to 6, **characterized in that** said reaction is effected at a pressure of from 0.1 to 30 bar.

8. Process according to Claim 7, **characterized in that** said reaction is effected at a pressure of from 1 to 4 bar.

## Revendications

1. Procédé de fabrication de trichlorosilane, TCS, par mise en réaction de silicium métallurgique, mg-Si, et d'HCl, **caractérisé en ce qu'**un mg-Si ayant une teneur en titane supérieure ou égale à 0,08 % en poids et inférieure ou égale à 0,12 % en poids, ainsi qu'une teneur en phosphore supérieure ou égale à 30 ppm en poids est utilisé.

2. Procédé selon la revendication 1, **caractérisé en ce qu'**un mg-Si qui présente pendant le durcissement une épaisseur moyenne maximale de 30 mm ou un diamètre moyen maximal de 15 mm est utilisé.

3. Procédé selon la revendication 2, **caractérisé en ce qu'**un mg-Si qui a été fabriqué par granulation dans l'eau est utilisé.

4. Procédé selon l'une quelconque des revendications 1 à 3, **caractérisé en ce qu'**un mg-Si ayant une teneur en Si supérieure à 98 % en poids est utilisé.

5. Procédé selon l'une quelconque des revendications 1 à 4, **caractérisé en ce que** la réaction a lieu à une température de 280 à 400 °C.

6. Procédé selon la revendication 5, **caractérisé en ce que** la réaction a lieu à une température de 320 à 380 °C.

7. Procédé selon l'une quelconque des revendications 1 à 6, **caractérisé en ce que** la réaction a lieu à une pression de 0,1 à 30 bar.

8. Procédé selon la revendication 7, **caractérisé en ce que** la réaction a lieu à une pression de 1 à 4 bar.
